# DEMANDE DE BREVET EUROPEEN

(11) **EP 0 822 166 A1**
(43) Date de publication de la demande: **04.02.1998**
(21) Numéro de dépôt: 97870112.6
(22) Date de dépôt: 25.07.1997
(51) Int. Cl.: C03B 23/11, B65G 47/24, B65B 35/30, B65B 35/56, B65B 35/10

(54) **Magasin pour dispositif de chargement de tubes**

(30) Priorité: 01.08.1996 BE 9600675
(71) Demandeur: New Couquelet Engineering s.p.r.l., 4030 Grivegnée (Liège) (BE)
(72) Inventeur: Couquelet, Gaston, 4130 Esneux (BE)
(74) Mandataire: Vanderperre, Robert

(57) **Abrégé**

Un magasin comprenant des traverses (11a, 11b) pour supporter une réserve de tubes, ces traverses étant fixées à des bandes (12, 13) enroulées autour de poulies. Les traverses se trouvent ainsi déplacées sans induire aucun mouvement relatif des bandes par rapport aux tubes au fur et à mesure que la masse de tubes se trouve déplacée entre une position basse et une position haute. De cette manière, le dispositif ne provoque aucun frottement des tubes l'un contre l'autre ni des tubes sur les traverses (11) ou contre les bandes (12, 13).

## Description

La présente invention s'inscrit dans le domaine de la fabrication d'ampoules et de flacons pharmaceutiques et cosmétiques au départ de tubes de verre, et elle concerne plus particulièrement le chargement des tubes de verre dans une machine de fabrication de ces ampoules et flacons.

Le chargement des tubes de verre se fait automatiquement à partir d'un magasin de tubes. Dans un magasin connu les tubes sont stockés et déplacés en position verticale. Les inconvénients majeurs de ce type de magasin sont la capacité de stockage réduite et le frottement des tubes de verre sur les parois du magasin, ce qui occasionne aux tubes des griffures.

Un autre magasin connu stocke les tubes de verre en position horizontale. Les tubes y sont entassés en couches superposées et sont délivrés par gravité à la base du magasin. Au cours de leur descente dans le magasin et de leur cheminement vers la sortie du magasin, les tubes frottent l'un sur l'autre et l'un contre l'autre ainsi que contre les parois fixes du magasin, ce qui occasionne aux tubes des griffures.

L'invention a pour but de remédier aux inconvénients résultant de l'utilisation des magasins connus et de permettre de charger les tubes de verre sans leur occasionner des griffures au départ d'une capacité de stockage élevée.

Ce résultat est obtenu grâce à un magasin tel que décrit dans les revendications.

Grâce à l'invention, le magasin délivre les tubes un à un sans provoquer aucun frottement des tubes l'un contre l'autre ni contre les parois du magasin, évitant ainsi toute griffure.

L'invention est exposée dans ce qui suit à l'aide des dessins joints. Dans ces dessins :
la figure 1 est une vue d'ensemble d'une installation de chargement de tubes incorporant le magasin suivant l'invention;
la figure 2 est une vue suivant la ligne II-II de la figure 1;
la figure 3 est une vue en coupe suivant la ligne III-III de la figure 2;
la figure 4 est une vue semblable à celle de la figure 3 avec les porte-tubes en position haute.

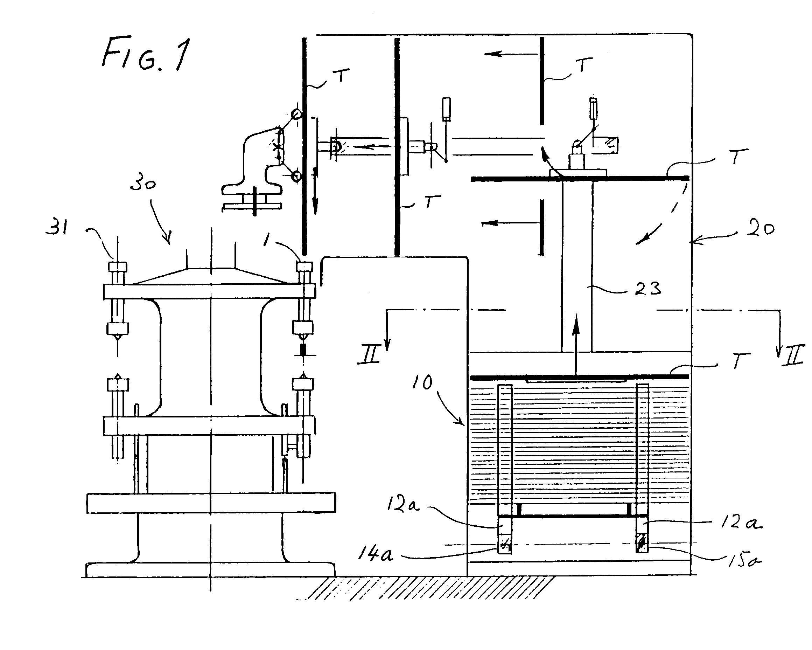

Sur la figure 1, le signe de référence 10 désigne un magasin suivant l'invention, 20 désigne un système d'acheminement de tubes depuis le magasin 10 jusqu'à une machine de fabrication d'ampoules et de flacons pharmaceutiques et cosmétiques au départ du tube de verre, machine connue en soi, désignée dans son ensemble par le signe de référence 30. Le magasin 10 est agencé pour recevoir une réserve de tubes en position horizontale.

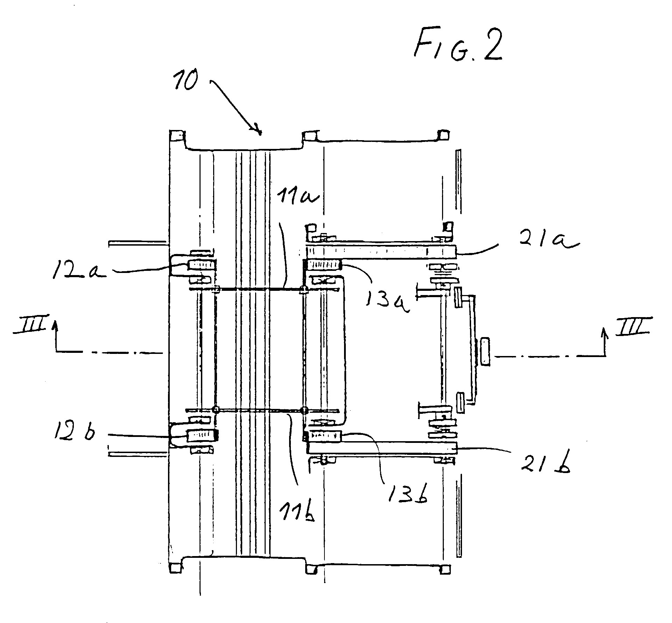

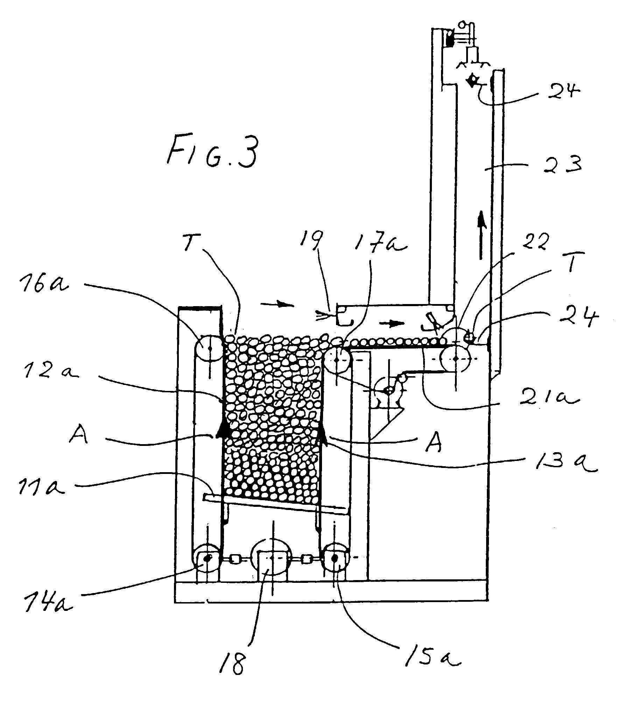

Se reportant plus particulièrement aux figures 2 et 3, on peut voir que le magasin 10 comprend un porte-tubes 11, constitué par exemple de deux traverses 11a et 11b fixées à chaque extrémité à deux bandes coulissantes 12a, 12b et 13a, 13b montées chacune autour de deux poulies : les bandes 12a et 12b sont montées autour des poulies 14a, 14b et 16a, 16b, les bandes 13a et 13b sont montées autour des poulies 15a, 15b et 17a, 17b. Les poulies 14 et 15 sont entraînées par un moteur électrique 18.

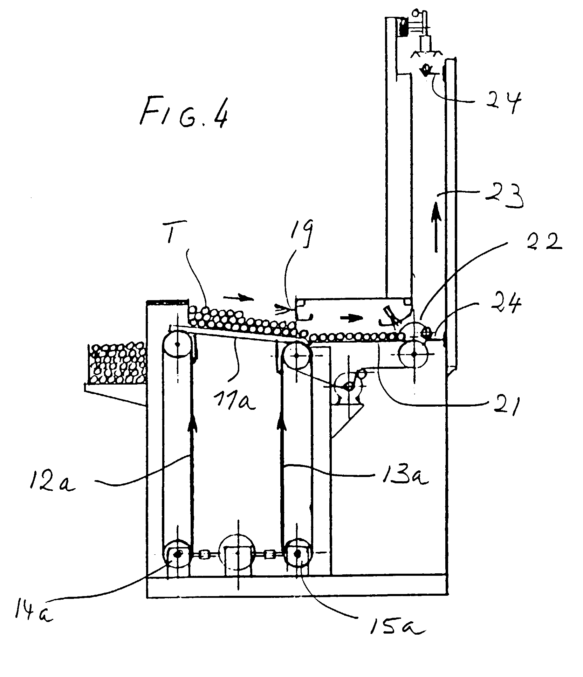

Lorsque les poulies 14 et 15 tournent, elles entraînent les bandes 12 et 13 qui se déplacent dans le sens de la flèche A sur les figures 3 et 4, les bandes entraînant les traverses 11a et 11b vers le haut depuis une position basse (représentée en figure 3) jusqu'à une position haute (représentée en figure 4), au fur et à mesure que les tubes de la nappe supérieure sont délivrés sur une bande transporteuse de sortie 21. A mesure que les traverses 11a et 11b s'élèvent, les parois 12 et 13 du magasin s'élèvent aussi, de sorte que, pour les tubes T portés par les traverses, les parois 12 et 13 sont immobiles. Ceci a pour résultat que les tubes ne frottent pas contre les parois comme dans les magasins connus. De même, restant en nappes superposées immobiles, les tubes ne frottent pas l'un sur l'autre ni l'un contre l'autre, évitant ainsi toute griffure.

Les tubes de la nappe supérieure sont délivrés sur la bande transporteuse en roulant. Pour favoriser ce roulement les traverses porte-tubes 11a et 11b sont fixées avec une légère inclinaison en pente vers la bande transporteuse 21. La sortie débouchant sur la bande transporteuse 21 est équipée d'un moyen 19 pour limiter la hauteur du passage de manière qu'un tube à la fois se trouve délivré sur la bande de sortie 21.

Les tubes délivrés sur la bande transporteuse 21 sont acheminés vers un positionneur à alvéoles 22 qui les dépose sur un élévateur 23 et celui-ci les élève un à un jusqu'à un moyen de préhension 24 qui les fait pivoter en position verticale. C'est ensuite dans cette position que les tubes sont amenés au-dessus d'un poste de remplissage 31 de la machine de remplissage de tube 30 (voir figure 1).

La vitesse de déplacement des bandes 12a, 12b et 13a, 13b, c'est-à-dire la vitesse d'élévation des traverses 11a et 11b, est réglée à mesure que varie la réserve de tubes disponibles au niveau de la sortie grâce à un capteur 19 pour détecter la hauteur de la réserve de tubes prêts à être délivrés.

## Revendications

1. Magasin pour contenir une réserve de tubes disposés horizontalement, destinés à être délivrés successivement à un dispositif de chargement de tubes dans une machine, par exemple une machine pour la fabrication d'ampoules et de flacons pharmaceutiques et cosmétiques à partir d'un tube de verre, caractérisé en ce que le magasin (10) comprend des traverses (11a, 11b) pour supporter les tubes, les traverses précitées étant fixées à des bandes (12, 13) enroulées autour de poulies (14, 16; 15, 17), et un moyen (18) pour entraîner les poulies de manière à déplacer les bandes (12, 13) et ainsi les traverses (11a, 11b) supportant les tubes sans induire aucun mouvement relatif desdites bandes de rapport aux tubes au fur et à mesure que se trouve déplacée la masse de tubes entre une position basse et une position haute et sans provoquer de frottement des tubes l'un contre l'autre ni des tubes sur les traverses (11) ou contre les bandes (12, 13).

2. Dispositif suivant la revendication 1, caractérisé en ce que le magasin comporte une aire de sortie délivrant les tubes un à un sur une bande transporteuse (21).

3. Dispositif suivant la revendication 1 ou 2, caractérisé en ce que les traverses (11a, 11b) sont inclinées avec une pente vers l'aire de sortie lorsqu'elles se trouvent amenées en position haute.

4. Dispositif suivant la revendication 2 ou 3, caractérisé en ce que l'aire de sortie est équipée d'un moyen (19) pour détecter la hauteur de la réserve de tubes amenés en position haute.

5. Dispositif suivant la revendication 4, caractérisé en ce qu'il comprend un moyen pour régler la vitesse de déplacement des bandes (12, 13) auxquelles sont fixées les traverses (11a, 11b) portant la réserve de tubes en fonction du signal de sortie du moyen de détection (19) précité.

6. Dispositif de chargement de tubes comprenant un magasin tel que décrit dans l'une quelconque des revendications précédentes.

7. Installation de remplissage de tubes comprenant un dispositif de chargement de tubes suivant la revendication 6.
